# EUROPEAN PATENT SPECIFICATION

(11) **EP 2 693 324 B1**
(45) Date of publication and mention of the grant of the patent: **27.02.2019**
(21) Application number: 13178393.8
(22) Date of filing: 29.07.2013
(51) Int. Cl.: G06F 3/0488, G06F 3/0354

(54) **Method and apparatus for controlling drag for a moving object of a mobile terminal having a touch screen**
Verfahren und Vorrichtung zur Steuerung der Verschiebung eines bewegliches Objektes eines mobiles Endgeräts mit Berührungsbildschirm
Procédé et appareil pour commander le glisser d'un objet en mouvement d'un terminal mobile comportant un écran tactile

(30) Priority: 30.07.2012 KR 20120082895
(43) Date of publication of application: 05.02.2014
(73) Proprietor: Samsung Electronics Co., Ltd., Gyeonggi-do 443-742 (KR)
(72) Inventor: Oh, Seungah, 443-742 Gyeonggi-do (KR); Park, Yeji, 443-742 Gyeonggi-do (KR); Bok, Ilgeun, 443-742 Gyeonggi-do (KR); Tae, Eunju, 443-742 Gyeonggi-do (KR)
(74) Representative: Nederlandsch Octrooibureau

(56) References cited:
- EP-A2- 2 378 406
- US-A- 5 726 687
- US-A1- 2009 251 432
- US-A1- 2010 295 795
- US-A1- 2012 096 393
- US-B1- 6 920 619

## Description

### BACKGROUND

### 1. Field of the Invention

The present invention relates generally to a method and apparatus for controlling drag for moving an object of a mobile terminal having a touch screen.

### 2. Description of the Related Art

Recently mobile terminals have developed into multimedia devices that provide various types of additional services such as, for example, an electronic note function, a game function, a schedule management function, and the like. This requires a user interface that allows a user to easily use and manage such services.

Normally when an object such as a cursor or an image is moved by means of a drag action, a drag speed and an object speed are set equally. In this case, actual movement of a drag corresponds to a speed of an object in a ratio of 1 to 1. However, when there is a need to move a cursor in a sentence having a small font size and a narrow spacing, it is difficult to move a cursor minutely. US5726687 discloses a system for scrolling during a drag and drop operation wherein the determination of whether to scroll is based on the location of a mouse indicator as well as the speed of the mouse indicator. The system determines when the mouse indicator is over a predefined area of a window, compares the speed of the mouse indicator to the predetermined threshold and scrolls the window if the mouse indicator is over the predefined area and the speed is less than the predetermined threshold.

Accordingly, there is a need to address the above-mentioned problems and/or disadvantages and to offer at least the advantages described below.

### SUMMARY

An aspect of the present invention is to provide a drag control method and apparatus in which when a drag input is detected after a predetermined time has elapsed from the time point of a touch input, the ratio of a drag speed to an object speed is defined variably.

In accordance with one exemplary aspect of the present invention, a method for controlling a drag for moving an object in a mobile terminal having a touch screen includes: displaying a control region for controlling a movement of the object; if an initial touch input is detected from the control region, checking duration of when a drag input is completed; based on the duration of the drag input completion, defining a ratio of a drag speed to an object speed; and moving the object in response to the drag input according to the defined ratio.

In accordance with another exemplary aspect of the present invention, a mobile terminal includes: a touch screen configured to display an object and a control region for controlling a movement of the object, and to receive a user's input for moving the object; and a control unit configured to, if a touch input is detected from the control region, check duration when a drag input is completed, to define a ratio of a drag speed and an object speed, based on the detection time of the drag input, and to move the object in response to the drag input according to the defined ratio.

According to this invention, when a drag input is detected after a predetermined time has elapsed from the initial time point of a touch input, the ratio of a drag speed to an object speed is defined according to predetermined criteria which in turn moves a cursor minutely in a sentence having a small font size and a narrow spacing or to scroll image items or list items quickly. The invention will be carried out according to the appended independent claims 1 and 8.

### BRIEF DESCRIPTION OF THE DRAWINGS

The above and other aspects, features and advantages of certain embodiments of the present invention will be more apparent from the following detailed description taken in conjunction with the accompanying drawings, in which:
FIG. 1 is a block diagram illustrating a mobile terminal in accordance with an exemplary embodiment of the invention;
FIG. 2 is a flow diagram illustrating a method for controlling a drag for moving an object in accordance with an exemplary embodiment of the invention;
FIG 3 is a schematic diagram illustrating a process of moving an object if a drag speeds and an object speed are set equally;
FIG 4 is a schematic diagram illustrating a process of moving an object if a drag speed and an object moving speed are set differently;
FIGs. 5A and 5B are schematic diagrams illustrating a process of moving a cursor if a drag speeds and a cursor speed are set equally;
FIGs6A, 6B and 6C are schematic diagrams illustrating a process of moving a cursor if a drag speeds and a cursor speed are set differently;
FIG. 7 is a schematic diagram illustrating a process of moving image items if a drag speed and an image movement speed are set equally;
FIG. 8 is a schematic diagram illustrating a process of moving image items if a drag speed and an image movement speed are set differently;
FIG. 9 is a schematic diagram illustrating a process of moving a list of items if a drag speed and a list speed are set equally; and
FIG. 10 is a schematic diagram illustrating a process of moving list items if a drag speeds and a list speed are set differently.

Throughout the drawings, the same or like drawing reference numerals will be understood to refer to the same or like elements, features and structures.

### DETAILED DESCRIPTION OF EXEMPLARY EMBODIMENTS

Exemplary, embodiments of the present invention will now be described more fully with reference to the accompanying drawings.

The term control region refers to an area where a touch and/or a drag input occur to control the movement of an object. The object may be displayed at the inside or outside of the control region.

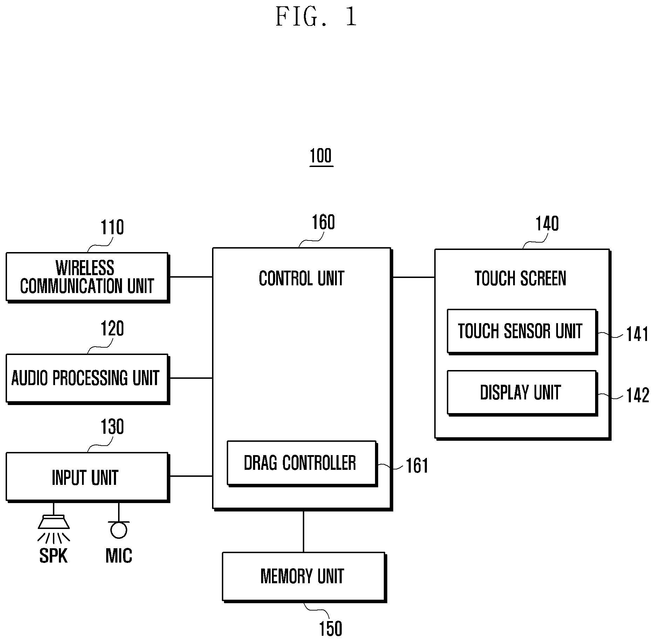

FIG. 1 is a block diagram illustrating a mobile terminal in accordance with an exemplary embodiment of the invention.

As shown in FIG. 1, the mobile terminal 100 may include a wireless communication unit 110, an audio processing unit 120, an input unit 130, a touch screen 140, a memory unit 150, and a control unit 160.

The wireless communication unit 110 performs a function to transmit and receive data for wireless communication of the mobile terminal 100. The wireless communication unit 110 may include an RF transmitter (not shown) that up-converts the frequency of an outgoing signal and then amplifies the outgoing signal, and an RF receiver (not shown) that low-noise amplifies an incoming signal and down-converts the frequency of the incoming signal. The wireless communication unit 110 may also output data received through a radio channel to the control unit 160, and transmit data outputted from the control unit 160 through a radio channel.

The audio processing unit 120 may be composed of CODECs which have a data CODEC for processing packet data, etc., and an audio CODEC for processing audio signals such as voice. The audio processing unit 120 converts digital audio signals into analog audio signals through the audio CODEC and then outputs them through the speaker (SPK). Also, the audio processing unit 120 converts analog audio signals inputted from the microphone (MIC) into digital audio signals by the audio CODEC.

The input unit 130 receives user's key manipulations for controlling the mobile terminal 100, creates input signals, and transfers them to the control unit 160. The input unit 130 may be formed of a keypad having alphanumeric keys and navigation keys, and may further have function keys provided on lateral sides of the mobile terminal 100. In some embodiments, any mobile terminal which can only be manipulated using the touch screen 140 may not have the input unit 130. The input unit 130 may receive, from a user, a touch input and/or a drag input for moving an object.

The touch screen 140 includes a touch sensor unit 141 and a display unit 142. The touch sensor unit 141 detects user's touch input. The touch sensor unit 141 may be composed of touch sensors of capacitive overlay type, resistive overlay type, or infrared beam type, or pressure sensors. Alternatively, in another embodiment, any other sensors capable of detecting a touch or a pressure may be used for the touch sensor unit 141. After detecting a user's touch input, the touch sensor unit 141 creates a touch detection signal and sends it to the control unit 160. The touch detection signal contains coordinate data of user's touch input. If the user moves a touch point, the touch sensor unit 141 creates touch detection signals including coordinate data of a moving path of a touch point, and sends them to the control unit 160.

The display unit 142 may be formed of LCD (Liquid Crystal Display), OLED (Organic Light Emitting Diodes), AMOLED (Active Matrix Organic Light Emitting Diodes), or any other equivalent. The display unit 142 visually offers, to a user, a menu of the mobile terminal 100, inputted data, function setting information, and any other information. The display unit 142 performs a function to output a booting screen, an idle screen, a menu screen, a call screen, and any other application executing screen of the mobile terminal 100.

The memory unit 150 stores programs and data required for operation of the mobile terminal 100 and may include a program region (not shown) and a data region (not shown). The program region may store a program for controlling the whole operations of the mobile terminal 100, an operating system (OS) for booting the mobile terminal 100, an application required for playing multimedia contents, and an application required for performing optional functions of the mobile terminal 100, such as a camera, an audio play, an image view, or a video play. The data region may store data created while the mobile terminal 100 is used, such as images, videos, phonebook, audio data, and the like.

In one embodiment, the memory unit 150 stores at least one particular program for defining the ratio of a drag speed to an object speed as a certain unequal value and for moving an object on the basis of the defined ratio when a drag input is detected after a predetermined time has elapsed from the time point of a touch input.

The control unit 160 controls the whole operations of the mobile terminal 100. Particularly, when a drag input is detected after a predetermined time has elapsed from the time point of a touch input, the control unit 160 may control a series of processes of defining the ratio of a drag speed to an object speed as a certain unequal value and, based on the defined ratio, of moving an object in response to a drag input. To this end, the control unit 160 may further include a drag controller 161.

If a touch input is detected in a control region (not shown), the drag controller 161 checks the time when a drag input is initially detected. Then, based on duration of the drag input completion, the drag controller 161 defines the ratio of a drag speed to an object speed. Thereafter, based on the defined ratio, the drag controller 161 controls the movement of the object in response to the drag input.

Specifically, if a drag input is detected after a predetermined time (i.e., 0.5 second) has elapsed from the initial time point of a touch input, the drag controller 161 defines the ratio of a drag speed to an object speed as a certain unequal value. In contrast, if a drag input is detected and completed before the predetermined time has elapsed from the initial time point of a touch input, the drag controller 161 defines the ratio of a drag speed to an object speed as an equal value.

Although the control unit 160 and the drag controller 161 are described above as separate blocks for performing different functions, it is merely for ease of description. Alternatively, in another embodiment, the control unit 160 may absorb specific functions of the drag controller 161.

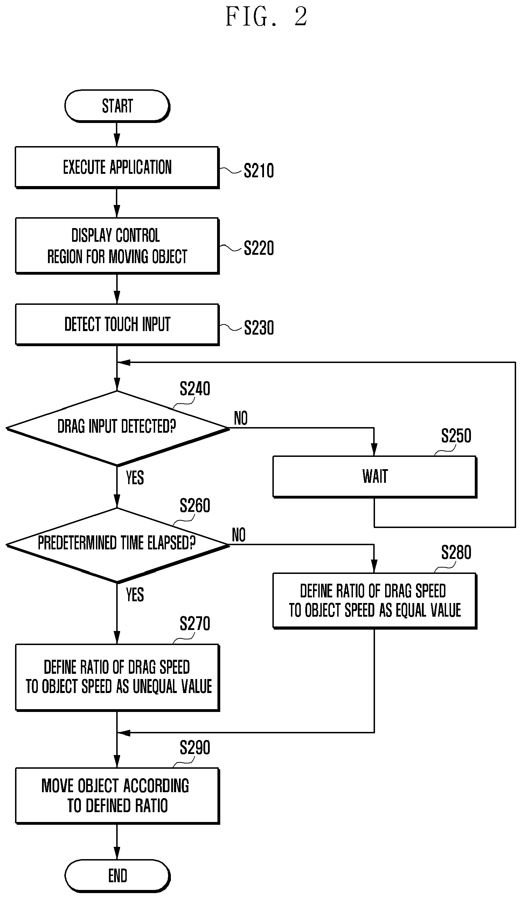

FIG. 2 is a flow diagram illustrating a method for controlling a drag for moving an object in accordance with an exemplary embodiment of the invention.

First, the control unit 160 detects any executed applications at step S210. The applications may include, but not limited to, a gallery, a video, a phonebook, an Internet connection, and the like. In embodiments, an application may be selected having an object to be moved depending on a user's drag input.

When the application is executed, the control unit 160 displays the control region for moving an object at step S220. As described above, the object may be a cursor, an image item, a list item, and the like. Also, the object may be displayed at the inside or outside of the control region.

At step S230, the control unit 160 detects that a touch input is received. Then, at step S240, the control unit 160 determines whether a drag input is detected. If a drag input is not detected, the control unit 160 waits for a drag input at step S250.

If a drag input is detected, the control unit 160 determines at step S260 whether a predetermined time has elapsed from the time point of a touch input. Namely, the control unit 160 determines whether a drag input is detected after an elapse of a predetermined time from a detection of a touch input. The predetermined time is a variable value and may be 0.5 second, 1 second, or the like.

If the predetermined time has not elapsed, the control unit 160 sets equally a drag speed and an object speed at step S280. Namely, the ratio of a drag speed to an object speed is defined as an equal value. This means that the distance of a moving object is set to be equal to the distance of a drag input.

In contrast, if the predetermined time has elapsed, the control unit 160 sets differently a drag speed and an object speed at step S270. Namely, the ratio of a drag speed to an object speed is defined as an unequal value. Specifically, an object speed may be set to be smaller than a drag speed or set to be greater than a drag speed. This ratio is a variable value which depends on the type of application or user's setting. For example, if there is a need to minutely move a cursor in a sentence having a small font size, an object speed is set to be smaller than a drag speed. If there is a need to scroll many items to find a desired one, an object speed is set to be greater than a drag speed.

Then, based on the ratio defined in step S270 or S280, the control unit 160 controls the object to be moved and displayed in response to a drag input at step S290.

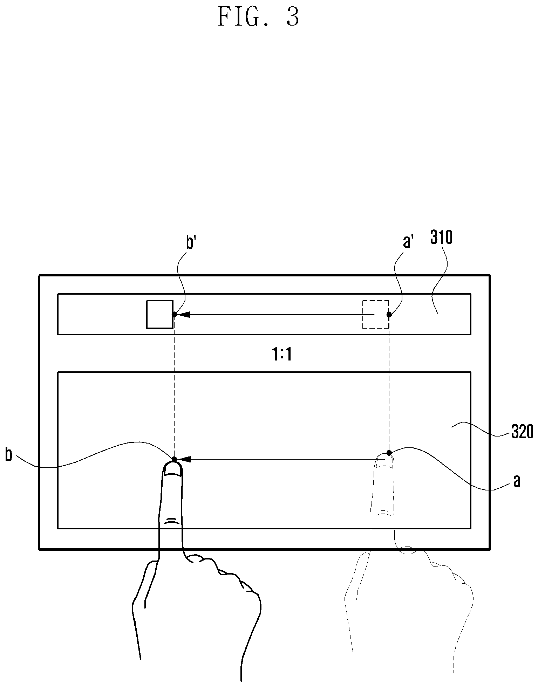

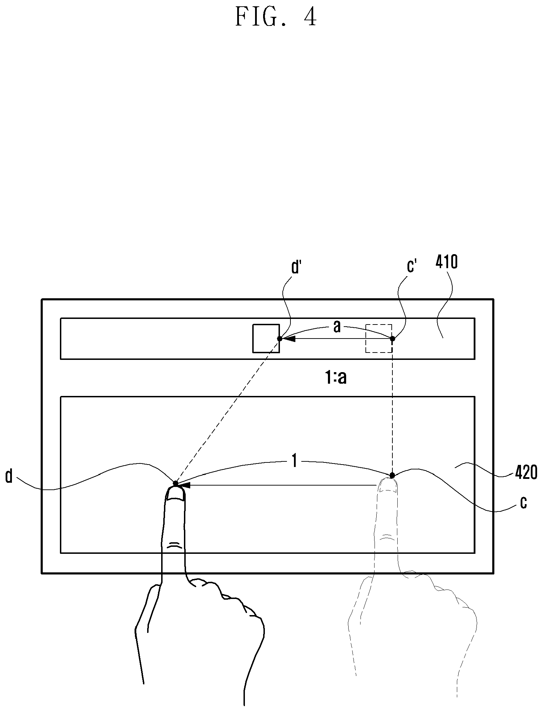

FIGS. 3 and 4 are schematic diagrams illustrating a process of moving an object based on the ratio of a drag speed to an object speed in accordance with embodiments of the invention.

FIG. 3 is a schematic diagram illustrating a process of moving an object in response to a drag input when a drag speed and an object speed are set equally.

As shown in FIG. 3, the display unit 142 of the mobile terminal 100 displays an object 310 and a control region 320. As mentioned above, the control region 320 is an area where a touch input and/or a drag input are received to control the object 310. Although FIG. 3 illustrates the object 310 located at the outside of the control region 320, in an alternate embodiment, the object 310 may be located at the inside of the control region 320.

The control unit 160 detects user's touch input from the control region 320. If a drag input is completed and detected within a predetermined time, e.g., 0.5 second, after a detection of the initial touch input, the control unit 160 defines the ratio of a drag speed to an object speed as an equal value. In other words, the drag speed and the object speed are set equally.

Thus, if a drag input is inputted from the position "a" to the position "b" in the control region 320 within the predetermined time, the control unit 160 moves the object from the position "a'" to the position "b'" at the same speed as the drag speed.

Meanwhile, FIG. 4 is a diagram illustrating a process of moving an object in response to a drag input when a drag speed and an object movement speed are set differently.

As shown in FIG. 4, the display unit 142 of the mobile terminal 100 displays an object 410 and a control region 420.

The control unit 160 detects user's touch input from the control region 420. If a drag input is detected after a predetermined time, e.g., 0.5 second, has elapsed, the control unit 160 defines the ratio of a drag speed to an object movement speed as an unequal value, 1 to a, in which "a" is greater or smaller than 1. In other words, the drag speed and the object speed are set differently.

Thereafter, if a drag input is inputted from the position "c" to the position "d" in the control region 420, the control unit 160 moves the object from the position "c'" to the position "d'" at a speed of "a" in comparison with the drag speed.

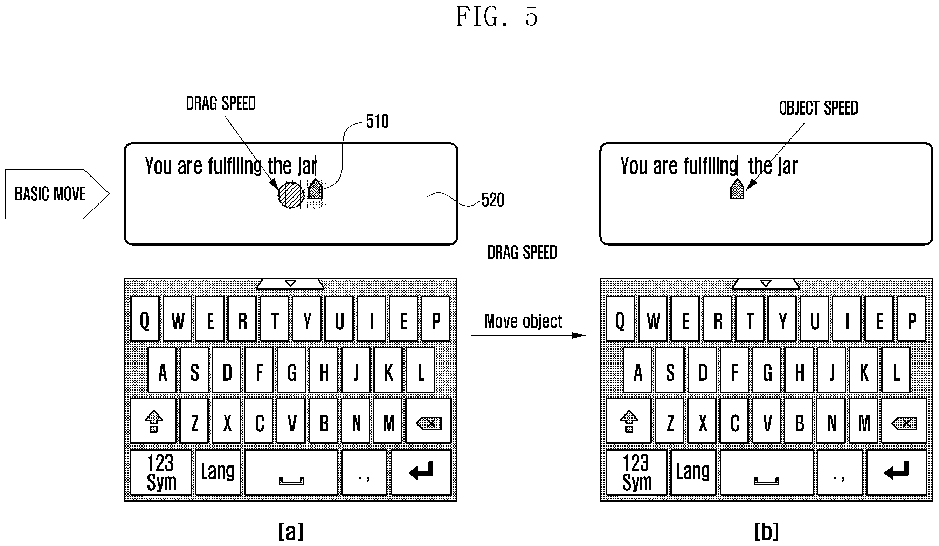

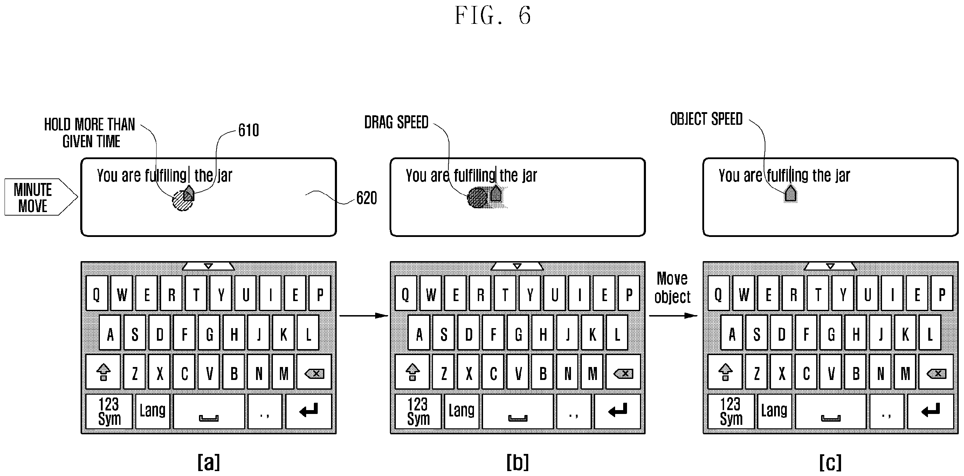

FIGS. 5 and 6 are schematic diagrams illustrating a process of moving a cursor based on the ratio of a drag speed to a cursor speed in accordance with embodiments of the invention.

FIG. 5 is a schematic diagram illustrating a process of moving a cursor if a drag speeds and a cursor speed are set equally.

In (a) and (b) of FIG. 5, a cursor 510 indicating a position for a letter input and a control region 520 for receiving a touch input and/or a drag input for controlling the movement of the cursor are shown.

As shown in (a) of FIG. 5, the control unit 160 detects a drag input of moving a touch input to the left after the touch input is received in the control region 520. Then, as shown in (b) of FIG. 5, the control unit 160 controls the cursor 510 to move to the left at the same speed as the drag speed.

FIG. 6 is a schematic diagram illustrating a process of moving a cursor if a drag speeds and a cursor speed are set differently.

In (a) and (b) of FIG. 6, a cursor 610 indicating a position for a letter input and a control region 620 for receiving a touch input and/or a drag input for controlling the movement of the cursor are shown.

As shown in (a) of FIG. 6, the control unit 160 detects an elapse of a predetermined time after a touch input is received and completed in the control region 620. Then, the control unit 160 defines the ratio of a drag speed to a cursor speed as an unequal value. In this case, it is supposed that a drag speed is set to be smaller than a cursor speed.

Additionally, as shown in (b) of FIG. 6, the control unit 160 detects a drag input of moving a touch input to the left. Then, as shown in (c) of FIG. 6, the control unit 160 controls the cursor 610 to move to the left at the speed reduced with the defined ratio in comparison with the drag speed.

In this embodiment, the cursor may be moved leftward space by space in a sentence. Namely, when a leftward drag input is detected at a certain speed, the control unit 160 may control the cursor to move leftward one by one in the minimum unit at a speed under the drag speed.

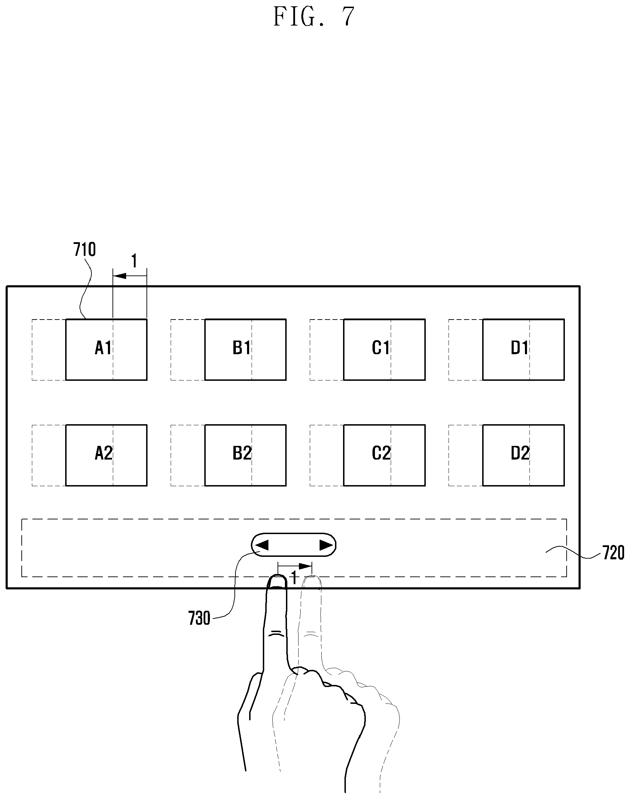

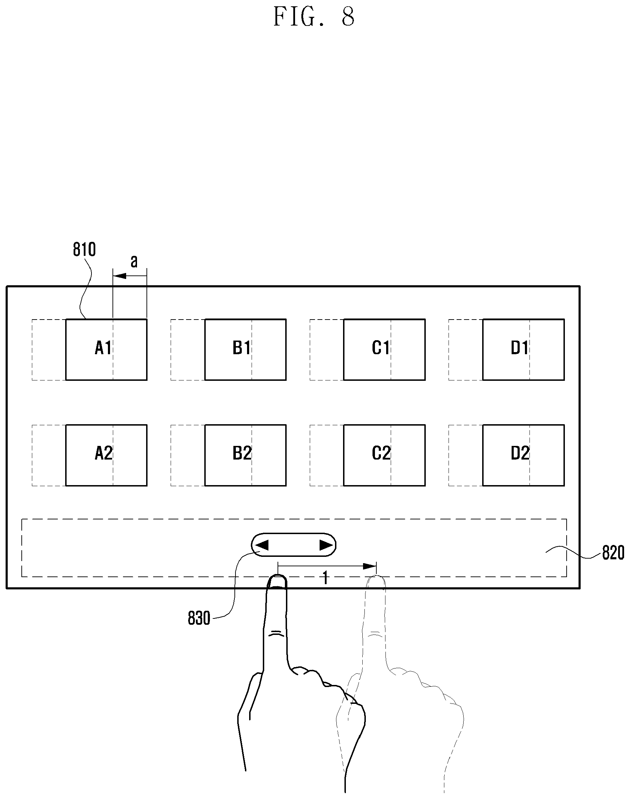

FIGS. 7 and 8 are schematic diagrams illustrating a process of moving image items in a gallery application based on the ratio of a drag speed to an image movement speed in accordance with embodiments of the invention.

FIG. 7 is a schematic diagram illustrating a process of moving the image items if a drag speeds and an item speed are set equally. In this embodiment, moving the image items not only scrolls the screen containing the image items, but also changes the current screen to another screen in order to display other image items which are not contained in the current screen.

In FIG. 7, an object which is the target of control is a plurality of image items 710 which are arranged in the display unit 142 according to a predefined rule. In this case, the image items 710 are arranged in a grid or matrix form. Additionally, a control region 720 which receives a touch input and/or a drag input in order to control the movement of the image items is displayed. Also, a handler 730 which is located in the control region 720 is displayed as the target of the touch and/or drag input. In another embodiment, the handler 730 may be not used, namely, removed from the screen.

After a touch input is detected through the handler 730, the control unit 160 detects a drag input of moving rightward the touch input. Then, the control unit 160 controls the image items arranged in a grid or matrix form to move to the left at the same speed as the drag speed. As the image items are moved leftward, hidden image items arranged at the right of the image items D1 and D2 are moved to and displayed on the display unit 142.

Although in this embodiment the image items are moved in the opposite direction to a drag direction, an alternative embodiment in which the image items are moved in the same direction as a drag direction is also possible.

FIG. 8 is a schematic diagram illustrating a process of moving the image items if a drag speeds and an image movement speed are set differently. In this embodiment, moving the image items includes scrolls and changing the screen containing the image items.

In FIG. 8, an object which is the target of control is a plurality of image items 810 which are arranged in the display unit 142 according to a predefined rule. In this case, the image items 810 are arranged in a grid or matrix form. Additionally, a control region 820 which receives a touch input and/or a drag input in order to control the movement of the image items is displayed. Also, a handler 830 which is located in the control region 820 is displayed as the target of the touch and/or drag input. In another embodiment, the handler 830 may be not used, namely, removed from the screen.

After a touch input is received through the handler 830, the control unit 160 detects the drag motion after an elapse of a predetermined time. Then, the control unit 160 defines the ratio of a drag speed to an image movement speed as an unequal value. In this case, a drag speed is set to be smaller than an image movement speed.

Thereafter, the control unit 160 detects from the handler 830 a drag input of moving rightward the touch input. Then, the control unit 160 controls the image items arranged in a grid or matrix form to move to the left at an increasing speed in comparison with the drag speed. As the image items are moved leftward, hidden image items arranged at the right of the image items D1 and D2 are moved to and displayed on the display unit 142.

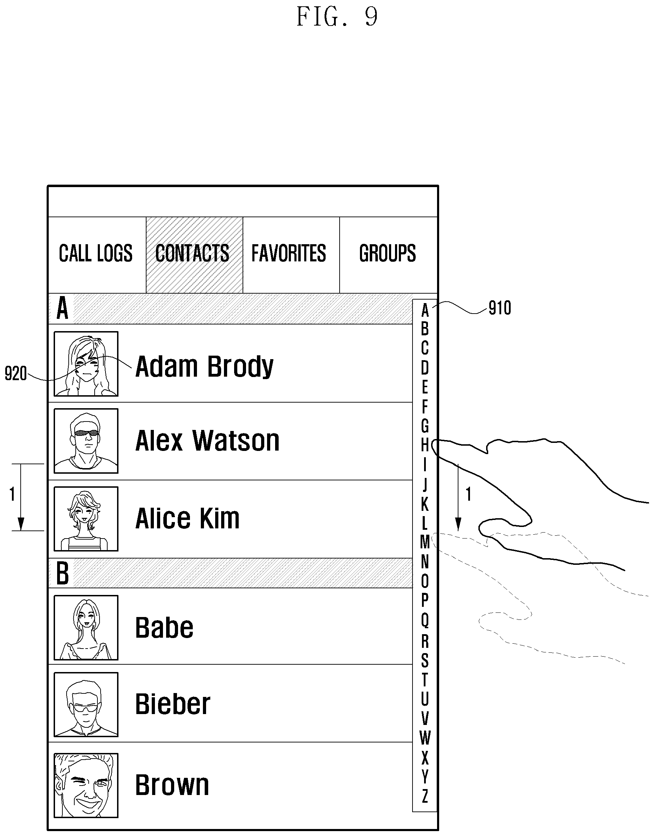

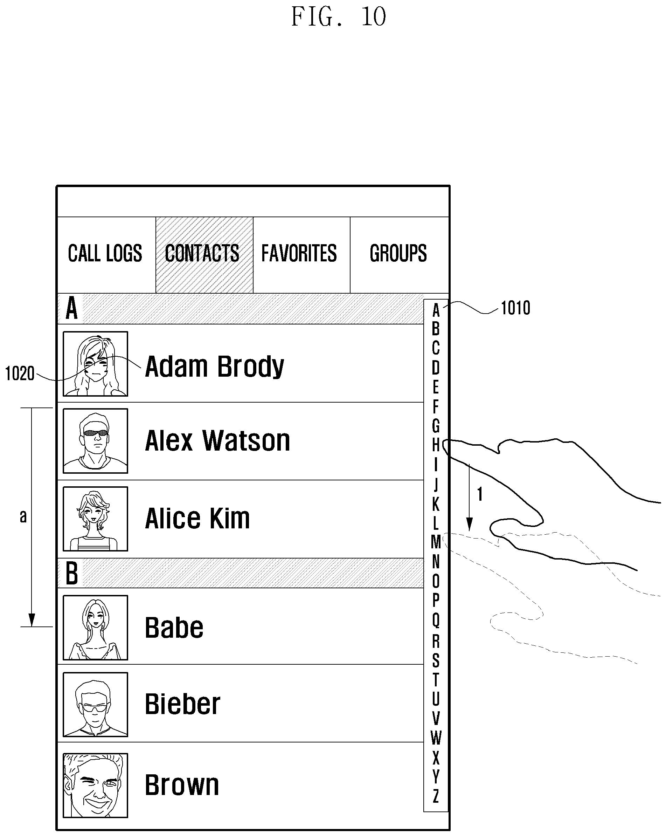

FIGS. 9 and 10 are schematic diagrams illustrating a process of moving list items in a list of contacts based on the ratio of a drag speed to a list speed in accordance with embodiments of the invention.

FIG. 9 is a schematic diagram illustrating a process of moving the list items if a drag speeds and a list speed are set equally. In this embodiment, moving the list items not only scrolls the screen containing the list items, but also changes the current screen to another screen in order to display other list items which are not contained in the current screen.

In FIG. 9, an object which is the target of control is a plurality of list items 910, e.g., contacts, which are arranged in the display unit 142 according to a predefined rule. In this case, the list items 910 are arranged lengthwise in alphabetical order. Additionally, a control region 910 which receives a touch input and/or a drag input in order to control the movement of the list items is displayed.

After a touch input is detected through the control region 910, the control unit 160 detects a drag input of moving the touch input downward. Then, the control unit 160 controls the list items arranged lengthwise to move downward at the same speed as the drag speed.

Although in this embodiment the list items are moved in the same direction to a drag direction, an alternative embodiment in which the list items are moved in the opposite direction as a drag direction is also possible.

FIG. 10 is a schematic diagram illustrating a process of moving the list items if a drag speeds and an image movement speed are set differently.

In FIG. 10, an object which is the target of control is a plurality of list items 1020, e.g., contacts, which are arranged in the display unit according to a predefined rule. In this case, the list items 1020 are arranged lengthwise in alphabetical order. Additionally, a control region 1010 which receives a touch input and/or a drag input in order to control the movement of the list items is displayed.

After a touch input is received in the control region 1010, the control unit 160 detects the drag motion after an elapse of a predetermined time. Then, the control unit 160 defines the ratio of a drag speed to a list speed as an unequal value. In this case, it is supposed that a drag speed is set to be smaller than a list speed.

Thereafter, the control unit 160 detects from the control region 1010 a drag input of moving the touch input downward. Then the control unit 160 controls the list items arranged lengthwise to move downward at an increasing speed in comparison with the drag speed.

Although in this embodiment the list items are moved in the same direction to a drag direction, an alternative embodiment in which the list items are moved in the opposite direction as a drag direction is also possible.

As discussed hereinbefore, when a drag input is detected after a predetermined time has elapsed from the time point of a touch input, the ratio of a drag speed to an object speed is set differently so that an object displayed in the screen is moved according to the set ratio in response to a drag input. Using this feature, it is therefore possible to move a cursor minutely in a sentence having a small font size and a narrow spacing or to scroll image items or list items quickly. It should be also noted that although 0.5 second is used to represent the predetermined time for illustrative purposes, other time periods can be used as a threshold time to set the ratio of a drag speed to an object speed according to the teachings of the present invention.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

## Claims

1. A method for controlling a speed of an object (310) moving in a touch screen (140), the method comprising:
displaying a control region (320) for controlling a movement of the object (310);
waiting for a drag input if an initial touch input is detected from the control region (320)
identifying a duration of the initial touch input until the drag input is detected;
determining whether the duration is longer than a predetermined time period;
defining a ratio of a drag speed to an object speed based on the determination outcome; and
moving the object (310) in response to the drag input according to the defined ratio.

2. The method of claim 1, wherein defining the ratio further comprises setting the drag speed and the object speed differently by a predefined amount if the duration is longer than the predetermined time period.

3. The method of claim 1, wherein defining the ratio further comprises setting the drag speed and the object speed equally if the duration is less than the predetermined time period.

4. The method of claim 1, wherein the object is provided at an inside or outside of the control region.

5. The method of claim 1, wherein the control region comprises a handler (830) for receiving the touch input and the drag input.

6. The method of claim 1, wherein the object comprises at least one of a cursor (510), an image item (710), and a list item (910).

7. The method of claim 6, wherein moving the object comprises, if the object is the cursor (510), moving the cursor space by space in a minimum unit in response to the drag input.

8. A mobile terminal (100) comprising:
a touch screen (140) configured to display an object (310) and a control region (320); and

9. The mobile terminal of claim 8, wherein the control unit (160) is further configured to set the drag speed and the object speed differently if the duration is longer than the predetermined time period .

10. The mobile terminal of claim 8, wherein the control unit (160) is further configured to set the drag speed and the object speed equally if the duration is less than the predetermined time period.

11. The mobile terminal (100) of claim 8, wherein the object is located at an inside or outside of the control region.

12. The mobile terminal of claim 8, wherein the control region (320) further comprises a handler (830) for receiving the touch input and the drag input.

13. The mobile terminal of claim 8, wherein the object further comprises at least one of a cursor (510), an image item (710), and a list item (910).

14. The mobile terminal (100) of claim 13, wherein the control unit (160) is further configured to, if the object is the cursor, move the cursor space by space in a minimum unit in response to the drag input.

## Patentansprüche

1. Verfahren zum Steuern einer Geschwindigkeit eines Objektes (310), das sich in einem Berührbildschirm (140) bewegt, wobei das Verfahren Folgendes umfasst:
Anzeigen einer Steuerregion (320) zum Steuern einer Bewegung des Objektes (310);
Warten auf eine Zieheingabe, wenn eine anfängliche Berühreingabe von der Steuerregion (320) erkannt wird;
Identifizieren einer Dauer der anfänglichen Berühreingabe, bis die Zieheingabe erkannt wird;
Ermitteln, ob die Dauer länger als eine vorgegebene Zeitdauer ist;
Definieren eines Verhältnisses einer Ziehgeschwindigkeit zu einer Objektgeschwindigkeit basierend auf dem Ermittlungsergebnis und
Bewegen des Objektes (310) in Reaktion auf die Zieheingabe gemäß dem definierten Verhältnis.

2. Verfahren nach Anspruch 1, wobei Definieren des Verhältnisses ferner unterschiedliches Einstellen der Ziehgeschwindigkeit und der Objektgeschwindigkeit um einen vordefinierten Betrag umfasst, wenn die Dauer länger als die vorgegebene Zeitdauer ist.

3. Verfahren nach Anspruch 1, wobei Definieren des Verhältnisses ferner gleiches Einstellen der Ziehgeschwindigkeit und der Objektgeschwindigkeit umfasst, wenn die Dauer kleiner als die vorgegebene Zeitdauer ist.

4. Verfahren nach Anspruch 1, wobei das Objekt an einer Innenseite oder Außenseite der Steuerregion bereitgestellt ist.

5. Verfahren nach Anspruch 1, wobei die Steuerregion einen Handler (830) zum Empfangen der Berühreingabe und der Zieheingabe umfasst.

6. Verfahren nach Anspruch 1, wobei das Objekt mindestens eines von einem Cursor (510), einem Bildelement (710) und einem Listenelement (910) umfasst.

7. Verfahren nach Anspruch 6, wobei Bewegen des Objektes, wenn das Objekt der Cursor (510) ist, Bewegen des Cursors flächenelementweise in einer Minimaleinheit in Reaktion auf die Zieheingabe umfasst.

8. Mobilendgerät (100), das Folgendes umfasst:
einen Berührbildschirm (140), der konfiguriert ist, ein Objekt (310) und eine Steuerregion (320) anzuzeigen; und
eine Steuereinheit (160), die konfiguriert ist,
auf eine Zieheingabe zu warten, wenn eine anfängliche Berühreingabe von der Steuerregion erkannt wird,
eine Dauer der anfänglichen Berühreingabe, bis die Zieheingabe erkannt wird, zu identifizieren,
zu ermitteln, ob die Dauer länger als eine vorgegebene Zeitdauer ist,
ein Verhältnis einer Ziehgeschwindigkeit zu einer Objektgeschwindigkeit basierend auf dem Ermittlungsergebnis zu definieren, und
das Objekt in Reaktion auf die Zieheingabe gemäß dem definierten Verhältnis zu bewegen.

9. Mobilendgerät nach Anspruch 8, wobei die Steuereinheit (160) ferner konfiguriert ist, die Ziehgeschwindigkeit und die Objektgeschwindigkeit unterschiedlich einzustellen, wenn die Dauer länger als die vorgegebene Zeitdauer ist.

10. Mobilendgerät nach Anspruch 8, wobei die Steuereinheit (160) ferner konfiguriert ist, die Ziehgeschwindigkeit und die Objektgeschwindigkeit gleich einzustellen, wenn die Dauer kleiner als die vorgegebene Zeitdauer ist.

11. Mobilendgerät (100) nach Anspruch 8, wobei das Objekt sich an einer Innenseite oder Außenseite der Steuerregion befindet.

12. Mobilendgerät nach Anspruch 8, wobei die Steuerregion (320) ferner einen Handler (830) zum Empfangen der Berühreingabe und der Zieheingabe umfasst.

13. Mobilendgerät nach Anspruch 8, wobei das Objekt ferner mindestens eines von einem Cursor (510), einem Bildelement (710) und einem Listenelement (910) umfasst.

14. Mobilendgerät (100) nach Anspruch 13, wobei die Steuereinheit (160) ferner konfiguriert ist, wenn das Objekt der Cursor ist, den Cursor flächenelementweise in einer Minimaleinheit in Reaktion auf die Zieheingabe zu bewegen.

## Revendications

1. Procédé de commande d'une vitesse d'un objet (310) se déplaçant dans un écran tactile (140), le procédé comprenant :
l'affichage d'une région de commande (320) pour commander un mouvement de l'objet (310) ;
l'attente d'une entrée de glisser si une entrée de toucher initiale est détectée depuis la région de commande (320) ;
l'identification d'une durée de l'entrée de toucher initiale jusqu'à ce que l'entrée de glisser soit détectée ;
la détermination si la durée est supérieure à une période de temps prédéterminée ;
la définition d'un rapport d'une vitesse de glisser sur une vitesse d'objet sur la base du résultat de la détermination ; et
le déplacement de l'objet (310) en réponse à l'entrée de glisser en fonction du rapport défini.

2. Procédé selon la revendication 1, dans lequel la définition du rapport comprend en outre le réglage de la vitesse de glisser et de la vitesse d'objet différemment d'une quantité prédéfinie si la durée est supérieure à la période de temps prédéterminée.

3. Procédé selon la revendication 1, dans lequel la définition du rapport comprend en outre le réglage de la vitesse de glisser et de la vitesse d'objet identiquement si la durée est inférieure à la période de temps prédéterminée.

4. Procédé selon la revendication 1, dans lequel l'objet est prévu à un intérieur ou un extérieur de la région de commande.

5. Procédé selon la revendication 1, dans lequel la région de commande comprend un gestionnaire (830) pour recevoir l'entrée de toucher et l'entrée de glisser.

6. Procédé selon la revendication 1, dans lequel l'objet comprend au moins l'un d'un curseur (510), d'un élément d'image (710), et d'un élément de liste (910).

7. Procédé selon la revendication 6, dans lequel le déplacement de l'objet comprend, si l'objet est le curseur (510), le déplacement de curseur de l'espace d'un espace dans une unité minimale en réponse à l'entrée de glisser.

8. Terminal mobile (100) comprenant :
un écran tactile (140) configuré pour l'affichage d'un objet (310) et d'une région de commande (320) ; et
une unité de commande (160) configurée pour :
l'attente d'une entrée de glisser si une entrée de toucher initiale est détectée depuis la région de commande,
l'identification d'une durée de l'entrée de toucher initiale jusqu'à ce que l'entrée de glisser soit détectée,
la détermination si la durée est supérieure à une période de temps prédéterminée,
la définition d'un rapport d'une vitesse de glisser sur une vitesse d'objet sur la base du résultat de la détermination, et
le déplacement de l'objet en réponse à l'entrée de glisser en fonction du rapport défini.

9. Terminal mobile selon la revendication 8, dans lequel l'unité de commande (160) est en outre configurée pour le réglage de la vitesse de glisser et de la vitesse d'objet différemment si la durée est supérieure à la période de temps prédéterminée.

10. Terminal mobile selon la revendication 8, dans lequel l'unité de commande (160) est en outre configurée pour le réglage de la vitesse de glisser et de la vitesse d'objet identiquement si la durée est inférieure à la période de temps prédéterminée.

11. Terminal mobile (100) selon la revendication 8, dans lequel l'objet est situé à un intérieur ou un extérieur de la région de commande.

12. Terminal mobile selon la revendication 8, dans lequel la région de commande (320) comprend en outre un gestionnaire (830) pour recevoir l'entrée de toucher et l'entrée de glisser.

13. Terminal mobile selon la revendication 8, dans lequel l'objet comprend en outre au moins l'un d'un curseur (510), d'un élément d'image (710), et d'un élément de liste (910).

14. Terminal mobile (100) selon la revendication 13, dans lequel l'unité de commande (160) est en outre configurée pour, si l'objet est le curseur, le déplacement de curseur de l'espace d'un espace dans une unité minimale en réponse à l'entrée de glisser.
